# EUROPEAN PATENT APPLICATION

(11) **EP 4 843 870 A1**
(43) Date of publication of application: **25.11.2026**
(21) Application number: 26164932.1
(22) Date of filing: 16.03.2026
(51) Int. Cl.: B62D 21/11, B60K 1/04, B62D 21/15

(54) **LOWER STRUCTURE FOR ELECTRIC VEHICLE**

(30) Priority: 20.05.2025 JP 2025084207
(71) Applicant: Suzuki Motor Corporation, Hamamatsu-shi, Shizuoka 432-8611 (JP)
(72) Inventor: NAGASAKI, Yuta, HAMAMATSU-SHI, 432-8611 (JP)
(74) Representative: Plasseraud IP

(57) **Abstract**

[Problem to be Solved] To reliably guide a suspension frame slidably below a battery pack in a frontal collision of a vehicle.

[Solution] A lower structure 1 for an electric vehicle includes a battery pack 2, a suspension frame 3 located in front of the battery pack 2 in the vehicle, and brace members 4, wherein the brace member 4 includes a front end portion joined to the suspension frame 3, a rear end portion coupled to the battery pack 2, and an inclined portion 43a extending between the front end portion and the rear end portion. The inclined portion 43a has an inclined surface 43a1 that faces upward and inclines downward toward the rear of the vehicle, and the rear end of the inclined surface 43a1 is located below the underside of the front end portion of the battery pack 2. The inclined portion 43a extends in the vehicle longitudinal direction with a constant width in the vehicle width direction.

## Description

### [Technical Field]

The present invention relates to lower structures for electric vehicles.

### [Background Art]

Electric vehicles, such as electric automobiles, are equipped with a battery pack that supplies power to a driving motor. As an example of such an electric vehicle structure, Patent Literature 1 discloses a structure including a battery pack provided below the floor of a vehicle cabin and a suspension frame that is provided in a motor compartment in the front of a vehicle and is located in front of the battery pack. The structure disclosed in Patent Literature 1 further includes a floor-side extension member that is provided on the underside of at least one of the dash lower panel and the floor panel and protrudes forward toward the front surface of the battery pack, and a member-side extension member that is provided on the rear edge of the suspension frame and faces the floor-side extension member in the vehicle longitudinal direction. The opposing surfaces of the floor-side extension member and the member-side extension member that face each other in the vehicle longitudinal direction are inclined surfaces that slope downward toward the rear of the vehicle. When the suspension frame moves rearward due to a frontal collision of the vehicle, the opposing surface of the member-side extension member collides with the opposing surface of the opposing surface of the floor-side extension member to move the member-side extension member downward and rearward along the inclination of the opposing surface, so that the suspension frame is guided downward and rearward to avoid entering the vehicle cabin.

### [Citation List]

### [Patent Literature]

[Patent Literature 1] JP 2019-130970 A

### [Summary of Invention]

### [Problem to be Solved by the Invention]

In order to improve the safety of an electric vehicle in a frontal collision, it is important to reduce damage to a battery pack. For this purpose, it is effective to guide the suspension frame slidably below the battery pack to reduce collision of the suspension frame with the battery pack. Such guidance for the suspension frame may not be achieved in the structure disclosed in Patent Literature 1, in which the suspension frame is guided by the two opposing surfaces. For example, when the location and orientation of the opposing surface of the floor-side extension member relative to the battery pack is changed due to deformation of the dash lower panel, the floor panel, or the like, the guidance path for the suspension frame may change relative to the battery pack. Thus, the structure disclosed in Patent Literature 1 can be improved in view of reliable guidance to slide the suspension frame below the battery pack.

An object of the present invention is to provide a lower structure for an electric vehicle, by which the suspension frame can be reliably guided to slide below the battery pack in a frontal collision of the vehicle.

### [Means for Solving the Problem]

An aspect of the present invention is a lower structure for an electric vehicle, including a battery pack disposed below the floor of a vehicle cabin, and a suspension frame that pivotally holds suspension arms in a motor compartment in the front of the vehicle and is located in front of the battery pack. The lower structure for the electric vehicle further includes a brace member connecting the suspension frame and the battery pack in the vehicle longitudinal direction. The brace member has a front end portion joined to the suspension frame, a rear end portion coupled to the battery pack, and an inclined portion that extends in the vehicle longitudinal direction at least between the front end portion and the rear end portion and extends in the vehicle width direction. The inclined portion has an inclined surface that faces upward and inclines downward toward the rear of the vehicle, and the rear end of the inclined surface is located below the underside of the front end portion of the battery pack in the vehicle vertical direction. The inclined portion extends in the vehicle longitudinal direction with a constant width in the vehicle width direction.

### [Advantageous Effect of Invention]

An aspect of the present invention can provide a lower structure for an electric vehicle, by which the suspension frame can be reliably guided to slide below the battery pack in a frontal collision of the vehicle.

### [Brief Description of Drawings]

[Figure 1] Figure 1 is a schematic top view showing a lower structure for an electric vehicle according to an embodiment of the present invention.
[Figure 2] Figure 2 is a schematic side view showing the lower structure for the electric vehicle when viewed from the left.
[Figure 3] Figure 3 is a schematic side view showing the principal part of the lower structure for the electric vehicle.
[Figure 4] Figure 4 is a top view showing a brace member joined to the rear end portion of a suspension frame.
[Figure 5] Figure 5 is a top perspective view showing the brace member joined to the rear end portion of the suspension frame.
[Figure 6] Figure 6 is a bottom perspective view showing the brace member joined to the rear end portion of the suspension frame.
[Figure 7] Figure 7 is a top perspective view showing a front part joined to the rear end portion of the suspension frame.

### [Mode for Carrying Out the Invention]

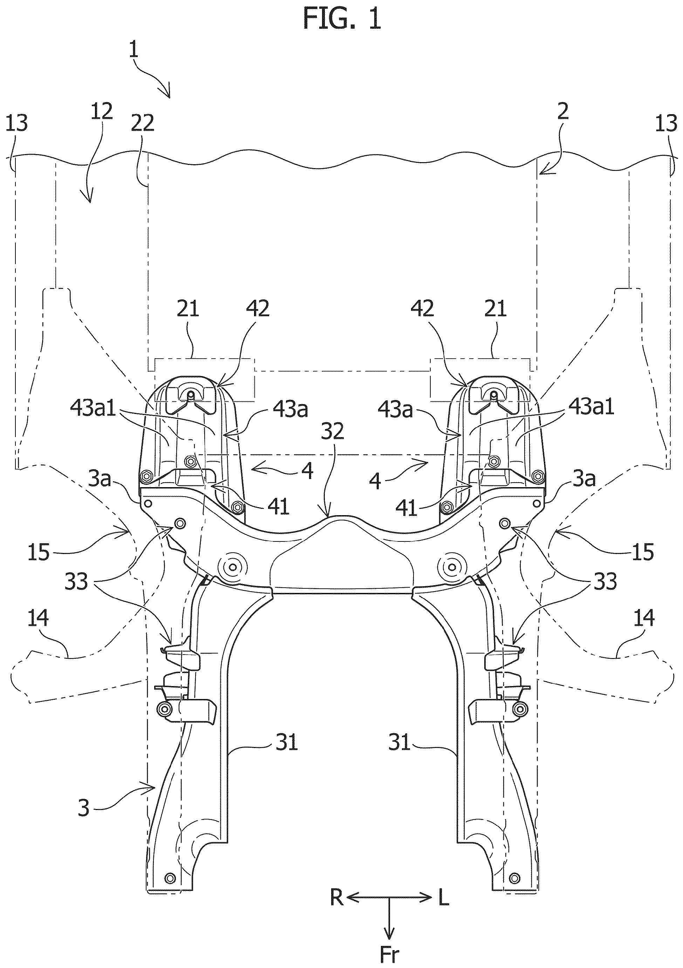

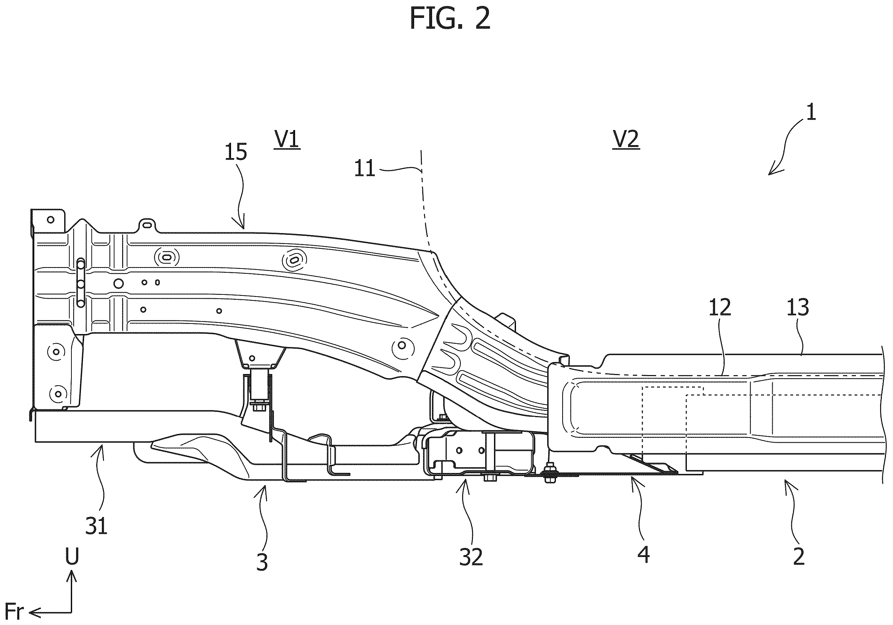

An embodiment according to the present invention will be specifically described below with reference to the accompanying drawings. Figure 1 is a schematic top view showing a lower structure 1 for an electric vehicle according to the present embodiment. Figure 2 is a schematic side view showing the lower structure 1 for the electric vehicle, the lower structure 1 being viewed from the left. In the drawings, an arrow Fr indicates the front side in the vehicle longitudinal direction. An arrow L and an arrow R indicate the left side and the right side in the vehicle width direction when the vehicle is viewed from the rear toward the front. An arrow U indicates the upper side of the vehicle in the vehicle vertical direction (hereinafter referred to as the vertical direction). Hereinafter, "front" and "rear" correspond to the front and rear in the vehicle longitudinal direction, and "upper" and "lower" correspond to the upper and lower sides in the vehicle vertical direction. "Left" and "right" correspond to the left and right, respectively, in the vehicle width direction when the vehicle is viewed from the rear toward the front.

The lower structure 1 is applied to a lower structure for an electric vehicle that is driven by a drive unit (not shown) including a driving motor. The drive unit is disposed in a motor compartment V1 in the front of the vehicle and generates power for driving the front wheels. The motor compartment V1 is separated from a vehicle cabin V2 by a dash panel 11 extending approximately in the vehicle width direction and vertical direction.

As shown in Figures 1 and 2, the lower structure 1 for the electric vehicle includes a battery pack 2, a suspension frame 3, and brace members 4. **In** Figure 1, to improve the visibility of the suspension frame 3 and the brace members 4, the battery pack 2, side sills 13, suspension arms 14, and front-side members 15 are indicated by chain lines. The battery pack 2 is disposed below a floor 12 of the vehicle cabin V2. The floor 12 is composed of a steel floor panel or the like and extends in the vehicle longitudinal direction and the vehicle width direction. The suspension frame 3 is disposed in the motor compartment V1 and is located in front of the battery pack 2 in the vehicle. The brace members 4 connect the suspension frame 3 and the battery pack 2 in the vehicle longitudinal direction.

The battery pack 2 is a battery for driving and supplies power to the drive unit through a cable (not shown). The battery pack 2 is disposed between the pair of side sills 13 in the vehicle width direction and is fixed to the pair of side sills 13 via a battery side member (not shown). The pair of side sills 13 is the pair of rigid members that extend in the vehicle longitudinal direction along both side edges of the floor 12 in the vehicle width direction.

The battery pack 2 includes battery-side coupling portions 21 and a case 22. The battery-side coupling portions 21 are portions to which the rear end portions (specifically, brace-side coupling portions 42, described later) of the brace members 4 are coupled, and are provided at the front end portion of the battery pack 2. In other words, in the present embodiment, the battery-side coupling portion 21 corresponds to a "the front end portion of the battery pack" according to the present invention. The battery-side coupling portions 21 are fixed to the front of the case 22 and protrude from the front of the case 22 toward the front of the vehicle. In the example shown, the battery-side coupling portion 21 is approximately shaped like a rectangular solid. The battery-side coupling portions 21 are disposed rearward with a gap from a rear end portion 3a of the suspension frame 3, which will be described later, and face the rear end portion 3a in the vehicle longitudinal direction. In the present embodiment, the two battery-side coupling portions 21 spaced in the vehicle width direction are provided. The case 22 stores a plurality of battery cells. The case 22 extends in the vehicle longitudinal direction and the vehicle width direction and has a predetermined thickness in the vertical direction. **In** the example shown, the case 22 is approximately shaped like a rectangle elongated in the vehicle longitudinal direction in top plan view.

The suspension frame 3 is a rigid frame for supporting the front suspension. The suspension frame 3 pivotally supports the suspension arms 14 (see Figure 1) of the front suspension in the lower part of the front of the vehicle. The suspension frame 3 may be used as a frame for supporting the drive unit. For example, the suspension frame 3 is formed as a frame component by joining a plurality of steel members, which have been subjected to press working or the like, by spotwelding or the like.

The pair of front-side members 15 that extend in the longitudinal direction and are spaced in the vehicle width direction is disposed above the suspension frame 3. The pair of front-side members 15 is a pair of rigid members constituting a part of a structural member (vehicle body frame) of the vehicle body in the front of the vehicle. The front-side members 15 each have the rear end portion joined to the front end portion of the side sill 13. The suspension frame 3 is coupled to the front-side members 15 at multiple points and thus is supported by the pair of front-side members 15.

In the example shown, the suspension frame 3 includes a pair of side frames 31, a frame body 32, and a plurality of arm holding portions 33. The pair of side frames 31 extends in the vehicle longitudinal direction, and the side frames 31 are separated from each other in the vehicle width direction. The side frame 31 is disposed below the front-side member 15 and is fixed to the front-side member 15, for example, at the front end portion and the intermediate portion in the vehicle longitudinal direction.

The frame body 32 extends in the vehicle width direction and connects the rear ends of the pair of side frames 31. The frame body 32 is generally shaped like a square pole opened at both end portions in the vehicle width direction. The rear end of the side frame 31 is joined to the front wall of the frame body 32 by spotwelding or the like. The frame body 32 has portions curved rearward on both sides in the vehicle width direction. Both ends of the frame body 32 in the vehicle width direction protrude toward the rear of the vehicle with respect to the intermediate portion in the vehicle width direction of the frame body 32 and constitute the rear end portions 3a of the suspension frame 3. The left and right battery-side coupling portions 21 of the battery pack 2 are arranged in the vehicle width direction with a gap corresponding to the gap between left and right rear end portions 3a in the vehicle width direction.

The arm holding portions 33 are portions that hold the suspension arms 14 in a vertically pivotable manner. In the example shown, the suspension arms 14 extend toward the front of the vehicle from the ends of the frame body 32 in the vehicle width direction and then extend outward in the vehicle width direction to be coupled to the front wheels (not shown). The arm holding portions 33 are provided at the intermediate portion in the vehicle longitudinal direction of each side frame 31 and at both ends in the vehicle width direction of the frame body 32.

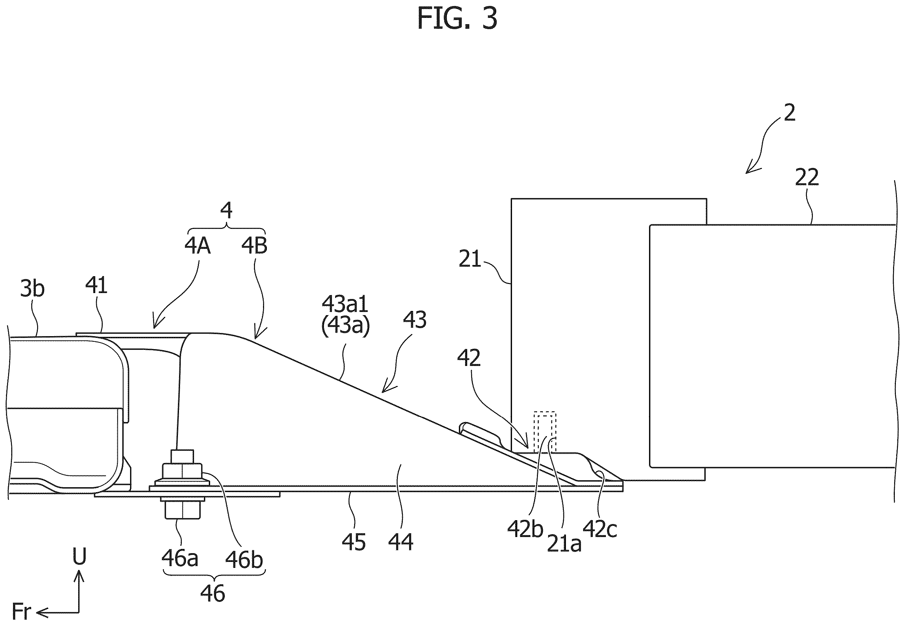

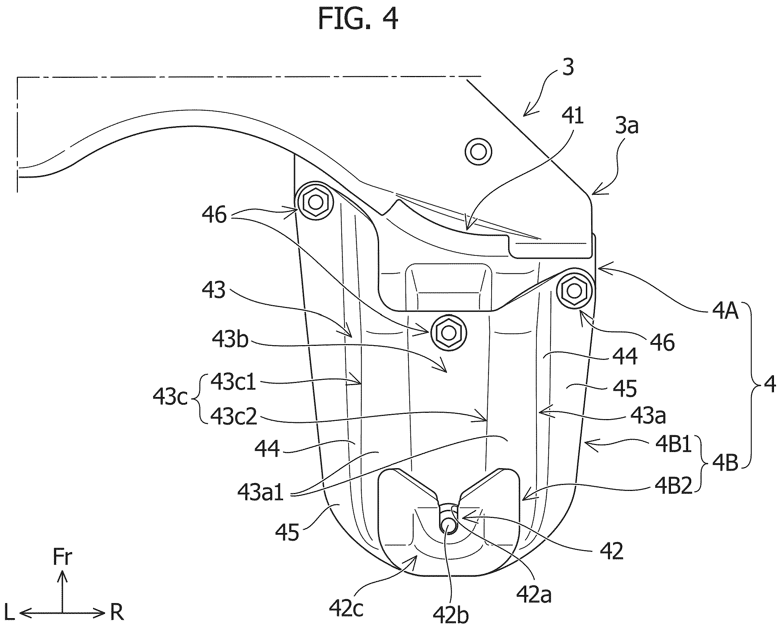

Figure 3 is a left side view including the left brace member 4 and the left battery-side coupling portion 21. Figures 4, 5, and 6 are a top view, a top perspective view and a bottom perspective view of the right brace member 4 joined to the right rear end portion 3a of the suspension frame 3, and the illustration of the battery pack 2 is omitted. In the present embodiment, the battery pack 2 and the suspension frame 3 have symmetrical structures in the vehicle width direction, and the right brace member 4 and the left brace member 4 have symmetrical structures in the vehicle width direction.

As shown in Figures 3 to 6, the brace member 4 extends in the vehicle longitudinal direction between the front end portion (21) of the battery pack 2 and the rear end portion 3a of the suspension frame 3. The brace member 4 has the front end portion coupled to the battery pack 2 and the rear end portion joined to the suspension frame 3. In the present embodiment, the lower structure 1 of the electric vehicle includes the two brace members 4 spaced in the vehicle width direction. The left brace member 4 connects the left rear end portion 3a of the suspension frame 3 and the left battery-side coupling portion 21. The right brace member 4 connects the right rear end portion 3a of the suspension frame 3 and the right battery-side coupling portion 21.

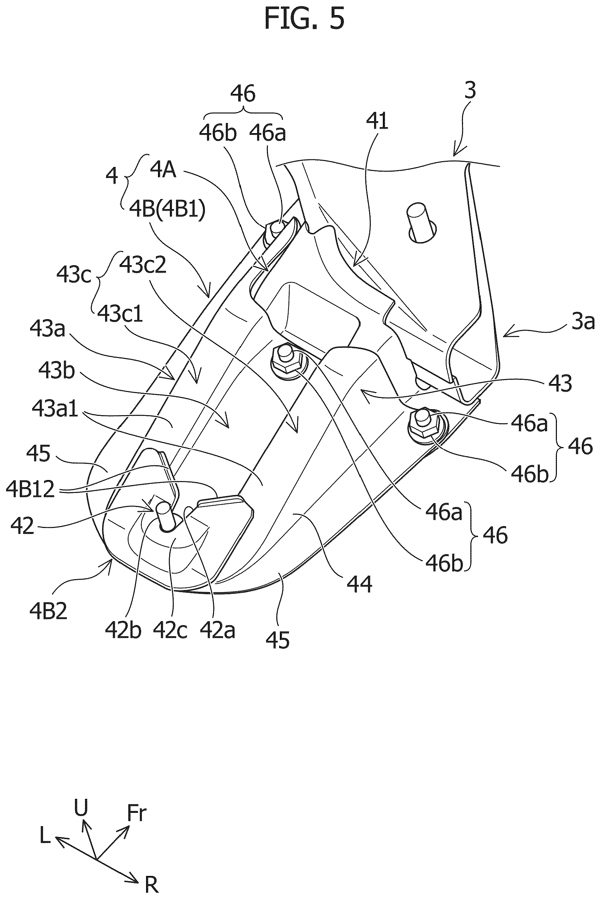

As shown in Figure 5 and other drawings, the intermediate portion in the vehicle width direction of the brace member 4 has a three-dimensional shape bulging upward. In the bulging portion of the brace member 4, the cross section of the brace member 4 orthogonal to the vehicle longitudinal direction has a substantially hat-shape opening downward. The brace member 4 is composed of a sheet metal member that is molded by, for example, pressworking. The height (dimension in the vertical direction) of the intermediate portion in the vehicle width direction of the brace member 4 gradually decreases toward the rear of the vehicle.

Specifically, the brace member 4 includes a brace-side joining portion 41, a brace-side coupling portion 42 (coupling portion), an upper wall portion 43 having an inclined portion 43a, a pair of side wall portions 44, and a pair of flange portions 45.

The brace-side joining portion 41 is a portion joined to the rear end portion 3a of the suspension frame 3. The brace-side joining portion 41 is provided at the front end portion of the brace member 4. In the example shown, the brace-side joining portion 41 is the front edge portion of the brace member 4 that has a substantially hat-shape opening downward when viewed from the front of the vehicle. The brace-side joining portion 41 is joined to the rear end portion 3a in an undetachable manner by arc welding along the front edge portion. Specifically, the brace-side joining portion 41 includes the front edge portion of the upper wall portion 43 that extends in the vehicle width direction and is joined to the upper surface of the rear end portion 3a, the front edge portions of the pair of side wall portions 44 that extend in the vertical direction and are joined to the rear surfaces of the rear end portions 3a, and the front edge portions of the pair of flange portions 45 that extend in the vehicle width direction and are joined to the undersides of the rear end portions 3a. Corresponding to the curved shape of the portion of the suspension frame 3 on each side in the vehicle width direction, the inner end in the vehicle width direction of the front edge portion of the brace member 4 is located forward relative to the outer end in the vehicle width direction of the front edge portion of the brace member 4.

The brace-side coupling portion 42 is a portion to be coupled to the battery-side coupling portion 21 at the front end portion of the battery pack 2. The brace-side coupling portion 42 is provided at the rear end portion of the brace member 4. When an impact load caused by a frontal collision of the vehicle is applied to the rear end portion of the brace member 4 from the front of the vehicle, the brace-side coupling portion 42 and the battery-side coupling portion 21 are disconnected from each other to move the brace member 4 rearward relative to the battery pack 2. In other words, the brace-side coupling portion 42 is coupled to the battery-side coupling portion 21 such that the brace-side coupling portion 42 is disconnected from the battery-side coupling portion 21 when an impact load is applied to the brace-side coupling portion 42 from the front of the vehicle. As will be described later, in the present embodiment, the brace-side coupling portion 42 includes a notch 42a through which a bolt 42b is inserted, and coupling of the brace-side coupling portion 42 with the battery-side coupling portion 21 is fastening with the bolt 42b. In the present embodiment, the brace-side coupling portion 42 corresponds to a "coupling portion" according to the present invention.

The upper wall portion 43 is an upper portion of the intermediate portion in the vehicle width direction of the brace member 4, the brace member 4 bulging upward. The upper wall portion 43 substantially faces the upper side of the vehicle and extends in the vehicle longitudinal direction and the vehicle width direction. The upper wall portion 43 has the inclined portion 43a that as a whole inclines downward toward the rear of the vehicle. In other words, the brace member 4 bulges upward at least in a range in the vehicle longitudinal direction in which the inclined portion 43a extends. In the present embodiment, the brace member 4 bulges in a range from the front edge of the brace member 4 to the vicinity of the rear edge of the brace member 4. The inclined portion 43a extends in the vehicle longitudinal direction at least between the front end portion of the brace member 4 and the rear end portion of the brace member 4, and extends in the vehicle width direction. In the example shown, the front end of the inclined portion 43a is located rearward of the front end portion (41) of the brace member 4, and the rear end of the inclined portion 43a is located at the rear end portion (42) of the brace member 4. The front edge portion of the upper wall portion 43 is disposed on the upper surface of the rear end portion 3a of the suspension frame 3.

The inclined portion 43a has an inclined surface 43a1, that faces upward, on the upper side. The inclined surface 43a1 extends in the vehicle longitudinal direction over the entire length of the inclined portion 43a and is inclined downward toward the rear of the vehicle. As shown in Figure 3, the rear end (lower end) of the inclined surface 43a1 is located below the underside of the front end portion (specifically, the battery-side coupling portion 21) of the battery pack 2 in the vertical direction. Specifically, the rear end of the inclined surface 43a1 is located below the upper surface of a convex portion 42c (described later) that comes into contact with the underside of the battery-side coupling portion 21 in the vertical direction. Furthermore, the rear end (lower end) of the inclined surface 43a1 is located rearward of the front surface of the battery-side coupling portion 21, that is, the front surface of the battery pack 2.

As shown in Figure 4, in a top view from above the vehicle, the inclined portion 43a extends in the vehicle longitudinal direction with a constant width in the vehicle width direction. In other words, in top view, the outer edge in the vehicle width direction of the inclined portion 43a and the inner edge in the vehicle width direction of the inclined portion 43a (that is, the pair of side wall portions 44) extend in parallel to each other. In the example shown, in top view, the outer edge in the vehicle width direction of the inclined portion 43a and the inner edge in the vehicle width direction of the inclined portion 43a extend straight in parallel in the vehicle longitudinal direction. In the description, "constant" means "substantially constant" as well as "perfectly constant". For example, the width of the inclined portion 43a may be slightly changed in the vehicle longitudinal direction.

As shown in Figures 4 and 5 and other drawings, the inclined portion 43a further includes a recess portion 43b and a bead portion 43c. At the central portion in the vehicle width direction of the inclined portion 43a, the recess portion 43b extends in the vehicle longitudinal direction over the entire length of the inclined portion 43a and is recessed downward. In the present embodiment, the recess portion 43b extends beyond the front end of the inclined portion 43a toward the front of the vehicle. The bead portion 43c includes both side portions in the vehicle width direction of the inclined portion 43a, the side portions bulging upward from the bottom of the recess portion 43b. The bead portion 43c extends along the recess portion 43b in the vehicle longitudinal direction, on both sides in the vehicle width direction of the recess portion 43b. Specifically, the bead portion 43c includes an inner bead portion 43c1 extending along the inner edge in the vehicle width direction of the recess portion 43b in top view, and an outer bead portion 43c2 extending along the outer edge in the vehicle width direction of the recess portion 43b in top view. The inner bead portion 43c1 forms a convex bead upward along with the inner side wall portion 44 in the vehicle width direction, and the outer bead portion 43c2 forms a convex portion upward along with the outer side wall portion 44 in the vehicle width direction. The upper surface of the bead portion 43c (43c1, 43c2) is a nearly flat surface that inclines downward toward the rear of the vehicle, and constitutes the inclined surface 43a1.

The pair of side wall portions 44 are both side portions in the vehicle width direction of the intermediate portion in the vehicle width direction of the brace member 4, the brace member 4 bulging upward. The pair of side wall portions 44 extends downward from the inner and outer edges in the vehicle width direction of the upper wall portion 43, and extends in the vehicle longitudinal direction. In a side view from one side in the vehicle width direction, a portion corresponding to the inclined portion 43a in each of the side wall portions 44 has a substantially triangular shape with a horizontal bottom extending in the vehicle longitudinal direction and an oblique side inclining downward toward the rear of the vehicle. The pair of flange portions 45 protrudes in the vehicle width direction from the lower edges of the pair of side wall portions 44 and extends in the vehicle longitudinal direction along the lower edges of the side wall portions 44.

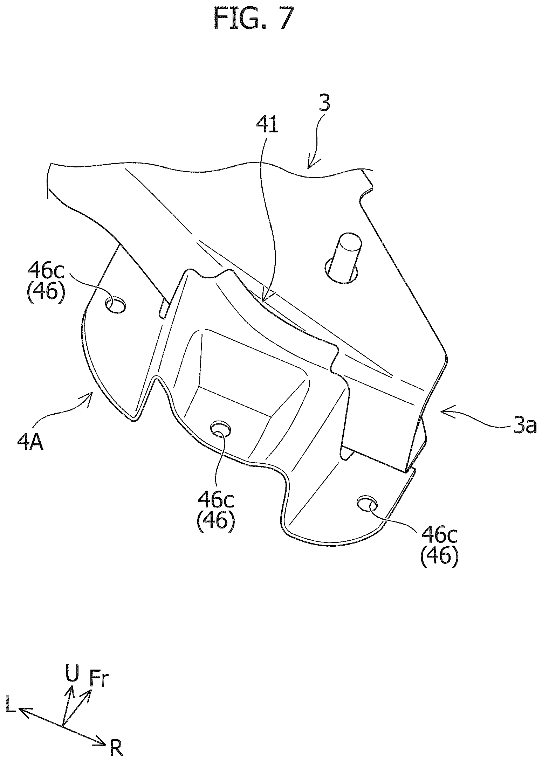

In the present embodiment, the brace member 4 has a front part 4A including the front end portion of the brace member 4, and a rear part 4B including the rear end portion of the brace member 4. Figure 7 shows the front part 4A with the rear part 4B removed. The rear part 4B is a longer part than the front part 4A in the vehicle longitudinal direction, and the inclined portion 43a is provided in the rear part 4B. The front end portion of the rear part 4B is disposed to overlap the rear end portion of the front part 4A in the vertical direction, and is joined to the rear end portion of the front part 4A at a plurality of part joining portions 46. In the example shown, the front end portion of the rear part 4B is disposed on the rear end portion of the front part 4A and is fastened to the rear end portion of the front part 4A with bolts 46a and nuts 46b at the three part joining portions 46. The part joining portions 46 are provided on the recess portion 43b and the left and right flange portions 45. On the front part 4A, insertion holes 46c, in which the bolts 46a are inserted, are formed (see Figure 7). On the rear part 4B, an insertion hole is formed also at a portion corresponding to the insertion hole 46c of the front part 4A. The front part 4A and the rear part 4B may be joined by means other than the bolts 46a and the nuts 46b.

Specifically, the front part 4A and the rear part 4B bulge upward at their respective intermediate portions in the vehicle width direction. The upper wall portion 43 is composed of an upper wall portion at the intermediate portion in the vehicle width direction of the front part 4A and an upper wall portion at the intermediate portion in the vehicle width direction of the rear part 4B. The recess portion 43b extends in the vehicle longitudinal direction over both of the upper wall portion of the front part 4A and the upper wall portion of the rear part 4B. In other words, a front recess portion is formed at the upper wall portion of the front part 4A, and a rear recess portion is formed at the upper wall portion of the rear part 4B. The recess portion 43b is composed of the front recess portion and the rear recess portion. The pair of side wall portions 44 is composed of a pair of side wall portions at the intermediate portion in the vehicle width direction of the front part 4A and a pair of side wall portions at the intermediate portion in the vehicle width direction of the rear part 4B. The pair of flange portions 45 is composed of both side portions in the vehicle width direction of the front part 4A and both side portions in the vehicle width direction of the rear part 4B.

The front edge portion of the upper wall portion at the intermediate portion in the vehicle width direction of the front part 4A is joined to the upper surface of the rear end portion 3a of the suspension frame 3. The front edge portions of the pair of side wall portions at the intermediate portion in the vehicle width direction of the front part 4A are joined to the rear surface of the rear end portion 3a of the suspension frame 3. The front edges of both side portions in the vehicle width direction of the front part 4A are joined to the underside of the rear end portion 3a of the suspension frame 3. The front end portion of the upper wall portion of the rear part 4B is joined to the upper wall portion of the front part 4A in the recess portion 43b. The front end portions of both side portions in the vehicle width direction of the rear part 4B are joined to both side portions in the vehicle width direction of the front part 4A.

As will be described later, in a frontal collision of the vehicle, an impact load input from the suspension frame 3 to the front part 4A is transmitted to the rear part 4B through the part joining portions 46. In order to increase the transmission efficiency of an impact load to the rear part 4B, the part joining portions 46 are preferably located closer to the suspension frame 3. In the example shown, both side portions in the vehicle width direction of the rear part 4B extend to the vicinity of the rear surface of the suspension frame 3 toward the front of the vehicle, and the two part joining portions 46 of the pair of flange portions 45 are set near the rear surface of the suspension frame 3. Specifically, the two part joining portions 46 are disposed forward of the part joining portion 46 of the recess portion 43b. Furthermore, since both side portions in the vehicle width direction of the frame body 32 are curved rearward, the part joining portion 46 of the inner flange portion 45 in the vehicle width direction is disposed forward of the part joining portion 46 of the outer flange portion 45 in the vehicle width direction.

The front part 4A and the rear part 4B are separately produced and are then joined to each other to be assembled into the brace member 4 when the suspension frame 3 is mounted on the vehicle body. Specifically, the front part 4A is joined to the suspension frame 3 by arc welding or the like, and then the rear part 4B is joined to the front part 4A.

The brace-side coupling portion 42 is provided at the central portion in the vehicle width direction of the rear end portion of the rear part 4B. In the present embodiment, the brace member 4 has a coupling member 4B2 provided at the rear end portion thereof. The brace-side coupling portion 42 including the notch 42a is provided on the coupling member 4B2. The coupling member 4B2 is composed of a separate member from other portions of the brace member 4. Specifically, the rear part 4B includes a body 4B1 joined to the front part 4A at the part joining portion 46, and the coupling member 4B2. The body 4B1 constitutes the principal part of the rear part 4B. As described above, the body 4B1 constitutes the upper wall portion 43, the pair of side wall portions 44, and the pair of flange portions 45 along with the front part 4A. The coupling member 4B2 is a separate member from the body 4B 1 and the front part 4A and is joined to the upper surface of the rear of the body 4B1 in an undetachable manner by spotwelding or the like.

The coupling structure of the rear end portion of the brace member 4 and the battery pack 2 will be described below. As shown in Figure 3, the battery-side coupling portion 21 at the front end portion of the battery pack 2 has a tapped hole 21a that extends in the vertical direction and is open at the underside of the battery-side coupling portion 21. As shown in Figure 5, the notch 42a extending in the vehicle longitudinal direction is formed on the coupling member 4B2. The notch 42a extends from the front edge of the coupling member 4B2 toward the rear of the vehicle and is open toward the front of the vehicle. The convex portion 42c bulging upward is provided at the central portion in the vehicle width direction of the coupling member 4B2, and the notch 42a is formed on the horizontal upper portion of the convex portion 42c. The notch 42a has a greater width than the diameter of the threaded portion of the bolt 42b to be screwed into the tapped hole 21a. In the example shown, the notch 42a is a U-shaped notch having a substantially constant width in the vehicle width direction, and the width of the notch 42a is slightly greater than the diameter of the threaded portion (or the diameter of the tapped hole 21a).

The rear end portion of the brace member 4 is disposed below the battery-side coupling portion 21 with the notch 42a aligned with the tapped hole 21a in the vertical direction, and overlaps the battery-side coupling portion 21 in the vertical direction. The rear end portion of the brace member 4 is fastened (coupled) to the battery-side coupling portion 21 from below with the bolt 42b screwed into the tapped hole 21a through the notch 42a. In the present embodiment, the bolt 42b is a "bolt" according to the present invention.

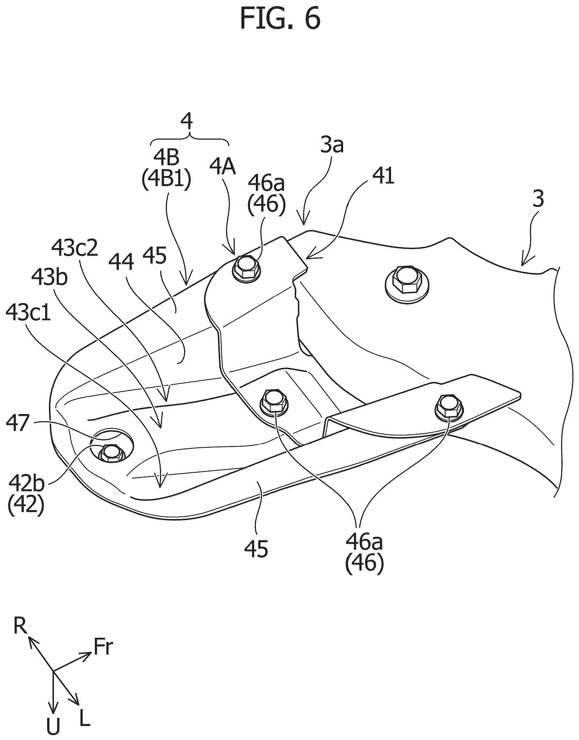

More specifically, the bolt 42b has the threaded portion and a head having a greater diameter than the threaded portion. For example, the bolt 42b is a hexagonal head bolt. The width of the notch 42a in the vehicle width direction is less than the diameter of the head. At a portion corresponding to the notch 42a on the body 4B1, a through hole 47 (see Figures 6 and 7) that allows the passage of the bolt 42b is formed. The bolt 42b is screwed into the tapped hole 21a from below through the notch 42a. The threaded portion is located at the rear end portion of the notch 42a, and the head overlaps the edge portion of the notch 42a on the coupling member 4B2 in the vertical direction. The rear part 4B is tightly fastened to the battery-side coupling portion 21 by firmly tightening the bolt 42b.

In a frontal collision of the vehicle, an impact load is applied to the suspension frame 3 from the front of the vehicle. The impact load is input from the rear end portions 3a of the suspension frame 3 to the front end portions of the brace members 4 and is transmitted to the rear end portions of the brace members 4. When an impact load greater than a fastening force between the rear end portion of the brace member 4 and the battery-side coupling portion 21 by the bolt 42b (specifically, a friction force between the coupling member 4B2 and the battery-side coupling portion 21) is applied to the rear end portion of the brace member 4, the brace member 4 slides toward the rear of the vehicle relative to the battery-side coupling portion 21 and the bolt 42b screwed into the tapped hole 21a, so that the bolt 42b is removed from the notch 42a. This disconnects the rear end portion of the brace member 4 from the battery-side coupling portion 21, allowing the brace member 4 and the suspension frame 3 to move relative to the battery pack 2.

As described above, the lower structure 1 for the electric vehicle according to the present embodiment includes the battery pack 2 disposed below the floor 12 of the vehicle cabin V2, the suspension frame 3 that pivotally holds the suspension arms 14 in the motor compartment V1 in the front of the vehicle and is located in front of the battery pack 2, and the brace members 4 that connect the suspension frame 3 and the battery pack 2 in the vehicle longitudinal direction. The brace member 4 includes the front end portion joined to the suspension frame 3, the rear end portion coupled to the battery pack 2, and the inclined portion 43a that extends at least between the front end portion and the rear end portion in the vehicle longitudinal direction and extends in the vehicle width direction. The inclined portion 43a has the inclined surface 43a1 that faces upward and inclines downward toward the rear of the vehicle, and the rear end of the inclined surface 43a1 is located below the underside of the front end portion of the battery pack 2 in the vehicle vertical direction. The inclined portion 43a extends in the vehicle longitudinal direction with a constant width in the vehicle width direction.

With such a structure, when an impact load is applied to the rear end portion of the brace member 4 by a frontal collision of the vehicle, the rear end portion of the brace member 4 and the battery pack 2 are disconnected from each other, allowing the brace member 4 and the suspension frame 3 to move toward the rear of the vehicle relative to the battery pack 2. At this time, the suspension frame 3 is guided downward and toward the rear of the vehicle by the inclined surfaces 43a1 of the brace member 4 so as to be slid under the battery pack 2. Specifically, the brace member 4 moves rearward with the inclined surfaces 43a1 in contact with the battery pack 2 and thus slides under the battery pack 2, and the rear end portion 3a of the suspension frame 3 subsequently slides under the battery pack 2. The brace member 4 under the battery pack 2 collides with the ground to stop movement of the brace member 4 and the suspension frame 3 rearward.

The rear end portion of the brace member 4 is directly coupled to the battery pack 2, and the front end portion of the brace member 4 is directly joined to the suspension frame 3. The inclined surfaces 43a1 for guiding the suspension frame 3 are provided on the brace member 4 thus configured, thereby correctly controlling the movement of the suspension frame 3 relative to the battery pack 2 to reliably guide the suspension frame 3 relative to the battery pack 2 along an intended guidance path.

As described above, the lower structure 1 for the electric vehicle according to the present embodiment can reliably guide the suspension frame 3 such that the suspension frame 3 slides under the battery pack 2 in a frontal collision of the vehicle. Furthermore, the collision of the retreating suspension frame 3 with the battery pack 2 and the resulting damage to the battery pack 2 can be reliably reduced.

Since the inclined portion 43a has a constant width, a sufficient width can be obtained over the entire length of the inclined portion 43a in the vehicle longitudinal direction. Thus, the front end portion of the inclined portion 43a has sufficient rigidity against an impact load input from the suspension frame 3, thereby reducing deformation of the front end portion of the inclined portion 43a. This can more reliably transmit an impact load to the rear end portion of the brace member 4 and disconnect the rear end portion. Moreover, deformation of the inclined surface 43a1 having the guidance function is reduced, thereby more reliably guiding the suspension frame 3 with the inclined surface 43a1. In addition, even when the brace member 4 is slightly displaced in the vehicle width direction after disconnection, the contact of the inclined surface 43a1 with the battery pack 2 can be stably maintained. This can more reliably guide the suspension frame 3.

Furthermore, in the lower structure 1 for the electric vehicle according to the present embodiment, the brace member 4 bulges upward at least in a range in the vehicle longitudinal direction in which the inclined portion 43a extends, and the inclined portion 43a is composed of the upper wall portion 43 of the brace member 4. The inclined portion 43a includes the recess portion 43b that extends in the vehicle longitudinal direction and is recessed downward at the central portion in the vehicle width direction, and the bead portion 43c (43c1, 43c2) that extends in the vehicle longitudinal direction on both sides of the recess portion 43b in the vehicle width direction. The inclined surface 43a1 is composed of the upper surface of the bead portion 43c (43c1, 43c2).

With this structure, the brace member 4 has a cross-sectional shape that is more resistant to a compression load in the vehicle longitudinal direction. In a frontal collision of the vehicle, in the initial stage before the rear end portion of the brace member 4 and the battery pack 2 are disconnected from each other, a compression load is applied to the brace member 4 in the vehicle longitudinal direction. The rigidity of the brace member 4 resistant to such a compression load can be reliably obtained. In addition, the inclined surface 43a1 is formed from the upper surface of the bead portion 43c (43c1, 43c2) having enhanced rigidity, thereby reducing deformation of the inclined surface 43a1. This can more reliably allow the inclined surface 43a1 to guide the suspension frame 3, and more reliably slide the suspension frame 3 under the battery pack 2.

Furthermore, in the lower structure 1 for the electric vehicle according to the present embodiment, the brace member 4 has the front part 4A including the front end portion of the brace member 4, and the rear part 4B that includes the rear end portion of the brace member 4 and is joined to the front part 4A. The rear part 4B has the inclined portion 43a.

With this structure, the brace members 4 can be easily optimized for the battery pack 2 and the suspension frame 3. Specifically, the shape and weight or the like of the rear part 4B can be easily optimized for the front end portion of the battery pack 2 (specifically, the battery-side coupling portions 21). In addition, the shape and weight or the like of the front part 4A can be easily optimized for the rear end portions 3a of the suspension frame 3. Moreover, the optimized brace members 4 can be manufactured with ease. As described above, the front part 4A is joined to the suspension frame 3, and then the rear part 4B is joined to the front part 4A with the bolts 46a or the nuts 46b. This can improve workability in the assembly of the brace members 4 to the suspension frame 3 in the manufacturing line.

Furthermore, in the lower structure 1 for the electric vehicle according to the present embodiment, the front part 4A and the rear part 4B bulge upward at their respective intermediate portions in the vehicle width direction, and the recess portion 43b extending in the vehicle longitudinal direction over the upper wall portion of the front part 4A and the upper wall portion of the rear part 4B is formed on the brace member 4. The intermediate portion in the vehicle width direction of the front part 4A and both side portions in the vehicle width direction of the front part 4A are joined to the suspension frame 3, the upper wall portion of the rear part 4B is joined to the upper wall portion of the front part 4A in the recess portion 43b, and both side portions in the vehicle width direction of the rear part 4B are joined to both side portions in the vehicle width direction of the front part 4A.

With this structure, transmission efficiency of an impact load from the suspension frame 3 to the rear end portion of the rear part 4B can be improved. Specifically, the central portion in the vehicle width direction of the front part 4A (specifically, the upper wall portion and the pair of side wall portions) and both side portions in the vehicle width direction of the front part 4A are joined to the suspension frame 3, thereby inputting an impact load from the suspension frame 3 to the front part 4A with high efficiency. Furthermore, an impact load input to the upper wall portion of the front part 4A is efficiently transmitted to the upper wall portion of the rear part 4B joined to the upper wall portion of the front part 4A. In addition, an impact load input to both side portions in the vehicle width direction of the front part 4A is efficiently transmitted to both side portions in the vehicle width direction of the rear part 4B, the rear part 4B being joined to both side portions in the vehicle width direction of the front part 4A. In particular, when the two part joining portions 46 at both side portions (45, 45) in the vehicle width direction are disposed near the rear end portion 3a of the suspension frame 3, the transmission efficiency of an impact load to both side portions in the vehicle width direction of the rear part 4B is further improved. Moreover, the front part 4A and the rear part 4B have cross-sectional shapes resistant to a load in the vehicle longitudinal direction and thus can efficiently transmit an input impact load rearward without being deformed by the impact load.

Furthermore, in the lower structure 1 for the electric vehicle according to the present embodiment, the brace member 4 includes the coupling member 4B2 that is provided at the rear end portion of the brace member 4 and is composed of a separate member from other portions (4A, 4B1) of the brace member 4. The coupling member 4B2 includes the convex portion 42c bulging upward, and the notch 42a that extends in the vehicle longitudinal direction and is open toward the front of the vehicle is formed at the upper portion of the convex portion 42c. At the front end portion (21) of the battery pack 2, the tapped hole 21a is formed, extends in the vertical direction and is open at the undersides. The rear end portion of the brace member 4 is fastened to the front end portion (21) of the battery pack 2 with the bolt 42b screwed into the tapped hole 21a through the notch 42a.

With this structure, sufficient coupling strength (fastening force) between the rear end portion of the brace member 4 and the front end portion of the battery pack 2 can be easily obtained by fastening with the bolt 42b. Moreover, since the notch 42a open toward the front of the vehicle is used as an insertion hole for the bolt 42b, the rear end portions of the brace members 4 and the front end portion of the battery pack 2 can be reliably disconnected from each other when an impact load is applied, and the suspension frame 3 can be more reliably slid under the battery pack 2. The notches 42a are formed at the upper portion of the convex portion 42c bulging upward, thereby improving the rigidity of the coupling member 4B2, in particular, rigidity in a portion surrounding the notches 42a. This can reduce deformation of the coupling member 4B2. Furthermore, the coupling member 4B2 composed of a separate member from other portions of the brace member 4 is easily worked and has a high degree of freedom in design. Thus, the coupling member 4B2 with desired coupling strength and desired rigidity can be easily fabricated, ensuring coupling (fastening) and disconnection between the brace member 4 and the battery pack 2 as intended.

The coupling member 4B2 may further have a structure for improving rigidity. For example, as shown in Figure 5, the coupling member 4B2 may have a vertical flange 4B21 that extends in the vehicle width direction along the front edge of the coupling member 4B2 and protrudes upward from the upper surface of the coupling member 4B2. The vertical flange 4B21 extends in the vehicle width direction from the front ends of both sides of the U-shaped edge of the notch 42a. The provision of the vertical flange 4B21 further improves rigidity of the coupling member 4B2, **in** particular, a portion surrounding the notches 42a. Thus, deformation of the coupling member 4B2 due to an impact load can be more reliably reduced.

An embodiment of the present invention is described above. The present invention is not limited to this embodiment and can be further modified and changed based on the technical concept of the present invention.

For example, in the above embodiment, coupling of the rear end portion of the brace member 4 to the battery pack 2 is by fastening with the bolt 42b. The coupling structure between the rear end portion of the brace member 4 and the battery pack 2 is not limited thereto. Another structure may be used such that the brace member 4 is disconnected by an impact load in a frontal collision. For example, the rear end portion of the brace member 4 may be coupled to the battery pack 2 via a member configured to be broken when an impact load is applied.

In the above embodiment, the rear end of the inclined surface 43a1 is located rearward of the front surface of the battery pack 2. The position of the rear end of the inclined surface 43a1 with respect to the battery pack 2 is not limited thereto. That is, in the vehicle longitudinal direction, the rear end of the inclined surface 43a1 may be located at the same position as the front surface of the battery pack 2 or may be located in front of the front surface of the battery pack 2. Also in this arrangement, in a frontal collision, the inclined surface 43a1 is brought into contact with the battery pack 2 by a rearward movement of the brace member 4 to perform the guidance function.

In the above embodiment, the brace member 4 is composed of the rear part 4B and the rear part 4B. The specific configuration of the brace member 4 is not limited thereto. For example, the brace member 4 may be composed of a single part or of three or more parts.

### [Reference Signs List]

- 1: Lower structure for electric vehicle
- 2: Battery pack
- 21: Battery-side coupling portion
- 21a: Tapped hole
- 22: Case
- 3: Suspension frame
- 3a: Rear end portion
- 31: Side frame
- 32: Frame body
- 33: Arm holding portion
- 4: Brace member
- 4A: Front part
- 4B: Rear part
- 4B1: Body
- 4B2: Coupling member
- 4B21: Vertical flange
- 41: Brace-side joining portion
- 42: Brace-side coupling portion (coupling portion)
- 42a: Notch
- 42b: Bolt
- 42c: Convex portion
- 43: Upper wall portion
- 43a: Inclined portion
- 43a1: Inclined surface
- 43b: Recess portion
- 43c: Bead portion
- 43c1: Inner bead portion
- 43c2: Outer bead portion
- 44: Side wall portion
- 45: Flange portion
- 46: Part joining portion
- 46a: Bolt
- 46b: Nut
- 46c: Insertion hole
- 47: Bolt insertion hole
- 11: Dash panel
- 12: Floor
- 13: Side sill
- 14: Suspension arm
- 15: Front-side member
- V1: Motor compartment
- V2: Vehicle cabin

## Claims

1. A lower structure for an electric vehicle, comprising a battery pack disposed below a floor of a vehicle cabin, and a suspension frame that pivotally holds suspension arms in a motor compartment in a front of the vehicle and is located in front of the battery pack in the vehicle,
**characterized in that** the lower structure further includes a brace member connecting the suspension frame and the battery pack in a vehicle longitudinal direction,
the brace member includes:
a front end portion joined to the suspension frame;
a rear end portion coupled to the battery pack; and
an inclined portion that extends in the vehicle longitudinal direction at least between the front end portion and the rear end portion and extends in a vehicle width direction, the inclined portion having an inclined surface that faces upward and inclines downward toward a rear of the vehicle,
a rear end of the inclined surface is located below an underside of a front end portion of the battery pack in a vehicle vertical direction, and
the inclined portion extends in the vehicle longitudinal direction with a constant width in the vehicle width direction.

2. The lower structure for an electric vehicle according to claim 1, wherein the brace member bulges upward at least in a range in the vehicle longitudinal direction in which the inclined portion extends,
the inclined portion is composed of an upper wall portion of the brace member and includes a recess portion that extends in the vehicle longitudinal direction and is recessed downward at a central portion in the vehicle width direction, and a bead portion that extends in the vehicle longitudinal direction on both sides of the recess portion in the vehicle width direction, and
the inclined surface is composed of an upper surface of the bead portion.

3. The lower structure for an electric vehicle according to claim 1, wherein the brace member has a front part including the front end portion of the brace member, and a rear part that includes the rear end portion of the brace member and is joined to the front part, and
the rear part includes the inclined portion.

4. The lower structure for an electric vehicle according to claim 3, wherein the front part and the rear part bulge upward at their respective intermediate portions in the vehicle width direction,
a recess portion extending in the vehicle longitudinal direction over an upper wall portion of the front part and an upper wall portion of the rear part is formed on the brace member,
the intermediate portion in the vehicle width direction of the front part and both side portions in the vehicle width direction of the front part are joined to the suspension frame, and
the upper wall portion of the rear part is joined to the upper wall portion of the front part in the recess portion, and both side portions in the vehicle width direction of the rear part are joined to both side portions in the vehicle width direction of the front part.

5. The lower structure for an electric vehicle according to claim 1, wherein the brace member includes a coupling member that is provided at the rear end portion is composed of a separate member from other portions of the brace member,
the coupling member includes a convex portion bulging upward, and a notch that extends in the vehicle longitudinal direction and is open toward the front of the vehicle is formed at an upper portion of the convex portion,
at the front end portion of the battery pack, a tapped hole that extends in a vertical direction and is open at an underside of the front end portion is formed, and
the rear end portion of the brace member is fastened to the front end portion of the battery pack with a bolt screwed into the tapped hole through the notch.
